# EUROPÄISCHE PATENTANMELDUNG

(11) **EP 0 587 932 A1**
(43) Veröffentlichungstag der Anmeldung: **23.03.1994**
(21) Anmeldenummer: 92115843.2
(22) Anmeldetag: 16.09.1992
(51) Int. Cl.: G01L 5/10

(54) **Vorrichtung zum Messen von Kräften, die an einem Schutznetz auftreten**

(71) Anmelder: EUROCK S.p.A., I-38017 Mezzolombardo (IT)
(72) Erfinder: De Salvador, Giuseppe, I-38010 San Michele All'Adige - TN (IT)
(74) Vertreter: Nöth, Heinz, Dipl.-Phys.

(57) **Zusammenfassung**

Eine Vorrichtung zum Messen von Kräften, die an einem Schutznetz auftreten mit einer Kraftmeßeinrichtung 3, die kraftschlüssig mit und zwischen zwei Verankerungsmitteln 4, 5 angeordnet ist, wobei die Verankerungsmittel mit zwei Seilstücken 6, 7 eines Seils des Schutznetzes kraftschlüssig verbunden sind.

## Beschreibung

Die Erfindung betrifft eine Vorrichtung zum Messen von Kräften, die an einem Schutznetz auftreten.

Derartige Schutznetze werden zur Absicherung von Berghängen gegen Abgänge, wie beispielsweise Muren, zur Absicherung von Felswänden, insbesondere brüchigen Felswänden, gegen Steinschlag und auch zur Lawinenschutzverbauung verwendet. Ferner werden Schutznetze überall dort verwendet, wo Gegenstände mit hoher kinetischer Energie zum Schutz von Einrichtungen und Lebewesen aufgefangen werden sollen.

Derartige Schutznetze werden gebildet aus Stahldrahtseilen, die einfach, zweifach oder dreifach geschlagene Seile sein können. Es eignen sich auch Kunststoffseile, insbesondere Nylonseile. Die Netzmaschen haben im allgemeinen eine Größe von 200 bis 300 mm, wobei die Seile Durchmesser zwischen 5 und 10 mm besitzen. Das Netz kann aus Teilnetzen zusammengesetzt sein, die von einem 10 bis 22 mm dicken Umrandungsseil umgeben sind. Die Netzteile können 3 bis 10 m lang und 2 bis 8 m hoch sein (EP 0 428 848 A1).

Aufgabe der Erfindung ist es, Kräfte, insbesondere Zugkräfte, die an bestimmten Stellen des Netzes, insbesondere in den Seilen, aus denen das Netz gebildet ist, auftreten, zu messen.

Zur Lösung dieser Aufgabe wird erfindungsgemäß eine Vorrichtung zum Messen von Kräften, die an einem Schutznetz auftreten, vorgeschlagen, welche dadurch gekennzeichnet ist, daß eine Kraftmeßeinrichtung kraftschlüssig mit und zwischen zwei Verankerungsmitteln angeordnet ist und daß die Verankerungsmittel mit zwei Seilstücken eines Seils des Schutznetzes kraftschlüssig verbunden sind.

Durch die Erfindung ist es möglich, an bestimmten Stellen des Schutznetzes, beispielsweise an den Verbindungsseilen, mit denen Netzteile zum Gesamtnetz verbunden sind, die Meßvorrichtung anzuordnen. Meßvorrichtungen können jedoch auch über die gesamte Fläche des Schutznetzes verteilt sein. Auch ist es möglich, die Meßvorrichtung in ein Seil einzusetzen, mit welchem das Netz an Stützpfosten und ähnlichen Befestigungsmitteln für das Netz aufgespannt ist. Ferner ist es möglich, die Kraftmeßeinrichtung in Spannseilen, die am Netz oder an Pfosten zum Aufspannen des Netzes angreifen und mit dem Untergrund, an welchem das Netz befestigt werden soll, z.B. über eine Seilbremse verbunden sind, einzusetzen.

Zum Verbinden der Meßvorrichtung mit dem entsprechenden Seil des Schutznetzes kann die Meßvorrichtung Verankerungsmittel aufweisen, von denen jedes einen konusförmigen Innenraum aufweist, in welches zusammen mit einem Füllmaterial aufgespleiste Enden der Seilstücke eingesetzt sind. Das Füllmaterial kann aus einem beim Einbringen in den konusförmigen Innenraum fließfähigen und anschließend aushärtbaren Material, beispielsweise Epoxydharz bestehen. Die aufgespleisten Enden sind im Füllmaterial bevorzugt bezüglich der Konusachse im außenliegenden Bereich des konusförmigen Innenraums des jeweiligen Verankerungselements angeordnet. Wenn das Seil aus Stahldrähten aufgebaut ist, sind die aufgespleisten Drahtenden in der Mehrzahl in diesem außenliegenden Bereich des konusförmigen Innenraums im Füllmaterial angeordnet.

Für die Kraftmessung besitzt die Kraftmeßeinrichtung einen bevorzugt stabförmig ausgebildeten Meßsteg als Verformungskörper, an welchem der Kraftmeßwandler, beispielsweise in Form von Dehnungsmeßstreifen, angeordnet ist. Für die Kraftmessung eignen sich jedoch auch andere Kraftmeßwandler, die auf dem Prinzip der Piezoelektrizität oder Magnetostriktion beruhen und bei denen die Verformung eines Verformungskörpers in elektrische Signale umgewandelt wird.

Die Verbindung zwischen der Kraftmeßeinrichtung und den Verankerungselementen, in denen die Seilstücke, insbesondere aufgespleisten Seilenden, verankert sind, erfolgt kraftschlüssig mit der Kraftmeßeinrichtung. Hierzu eignet sich bevorzugt eine Schraubverbindung, wobei Gewinde an beiden Enden des Verformungskörpers bzw. stabförmigen Meßstegs und den Verankerungselementen vorhanden sind, die beispielsweise mittels einer Überwurfmutter miteinander verbindbar sind. Es ist jedoch auch möglich, daß an den Verankerungselementen Innengewinde vorgesehen sind, die mit entsprechenden Außengewinden an den Enden des Verformungskörpers verschraubt sind, oder es können auch Innengewinde an den Enden des Verformungskröpers der Meßeinrichtung und Außengewinde an den Verankerungselementen zur Bildung des Kraftschlusses zwischen dem Verformungskörper der Meßeinrichtung und den Seilenden verschraubt sein.

Anhand der Figuren, welche Ausführungsbeispiele der Erfindung zeigen, wird die Erfindung noch näher erläutert. Es zeigt:
- Figur 1:: wesentliche Bestandteile eines ersten Ausführungsbeispiels der Erfindung;
- Figur 2:: das erste Ausführungsbeispiel der Erfindung in zusammengebautem Zustand;
- Figur 3:: ein zweites Ausführungsbeispiel in zusammengebautem Zustand;
- Figur 4:: ein drittes Ausführungsbeispiel; und
- Figur 5:: ein Ausführungsbeispiel, eingebaut in ein Schutznetz.

Wie die Figur 5 zeigt, kann eine Meßvorrichtung 1 zum Messen von Kräften, die an einem Schutznetz 2, insbesondere an Seilen des Schutznetzes auftreten, gemessen werden. Bei der in der Figur 5 dargestellten Anordnung befindet sich eine Kraftmeßeinrichtung 3 der Meßvorrichtung 1 in einem Aufspannseil, an welchem die Maschen des Schutznetzes 2 aufgespannt sind. Es ist auch möglich, die Meßvorrichtung 1 in Verbindungsseilen anzuordnen, welche zum Verbinden mehrerer Netzteile des Schutznetzes 2 dienen. Ferner kann die Meßvorrichtung 1 auch an jedem beliebigen Ort innerhalb des Schutznetzes 2 vorgesehen sein, falls dort Kräfte gemessen werden sollen. Die Meßvorrichtung 1 besitzt ferner eine Meßstation 24, an welche den gemessenen Kräften proportionale elektrische Signale zur Auswertung zugeleitet werden. Es können auch mehrere Kraftmeßeinrichtungen 3 an verschiedenen Stellen des Schutznetzes 2 an die Meßstation 24 angeschlossen sein.

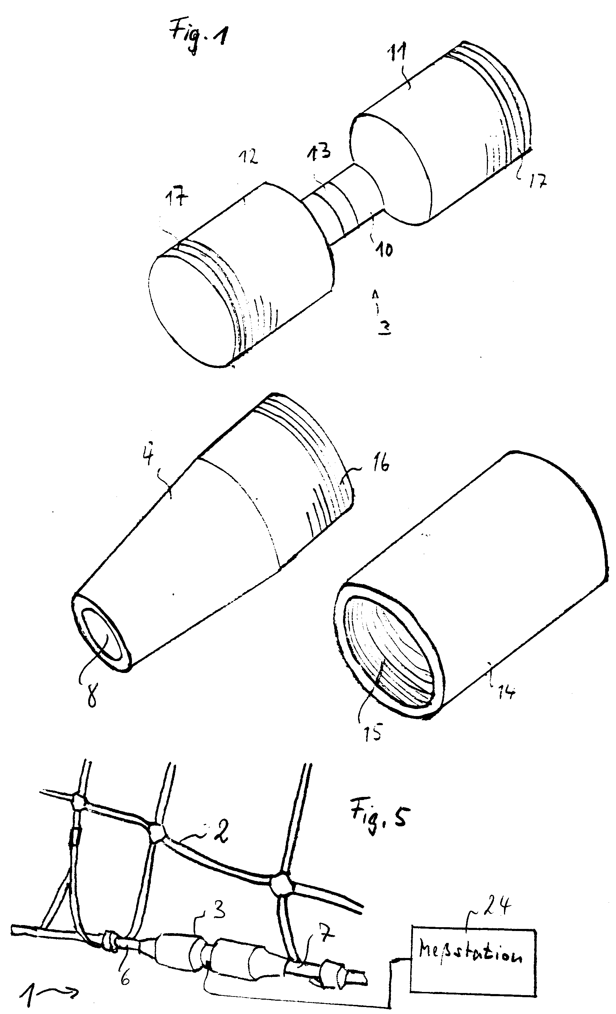

In den Figuren 1 bis 4 sind verschiedene Ausführungsbeispiele für die Kraftmeßeinrichtung 3 dargestellt.

Die Kraftmeßeinrichtungen 3 gemäß den Ausführungsbeispielen der Figuren 1 bis 4 besitzen als Verformungskörper einen Meßsteg 10, der stabförmig ausgebildet ist. Bei den Ausführungsbeispielen handelt es sich um einen Rundstab, der den Verformungskörper bzw. Meßsteg 10 bildet. Die Enden des Meßsteges 10 sind verstärkt als Verbindungsstücke 11, 12 ausgebildet. Jedes Verbindungsstück 11, 12 besitzt ein Außengewinde 17. Am Meßsteg 10 ist in der Mitte ein Kraftmeßwandler 13 vorgesehen. Es kann sich hier um Dehnungsmeßstreifen, die beispielsweise zu einer Meßbrücke geschaltet sind, handeln. Als Kraftmeßwandler sind jedoch auch piezoelektrische Meßwandler, induktive Kraftaufnehmer, magnetoelastische Kraftaufnehmer und dergl. geeignet. Der Kraftmeßwandler 13 liefert ein der gemessenen Kraft proportionales gemessenes Signal, das, wie in Figur 5 dargestellt ist, an die Meßstation 24 weitergeleitet wird.

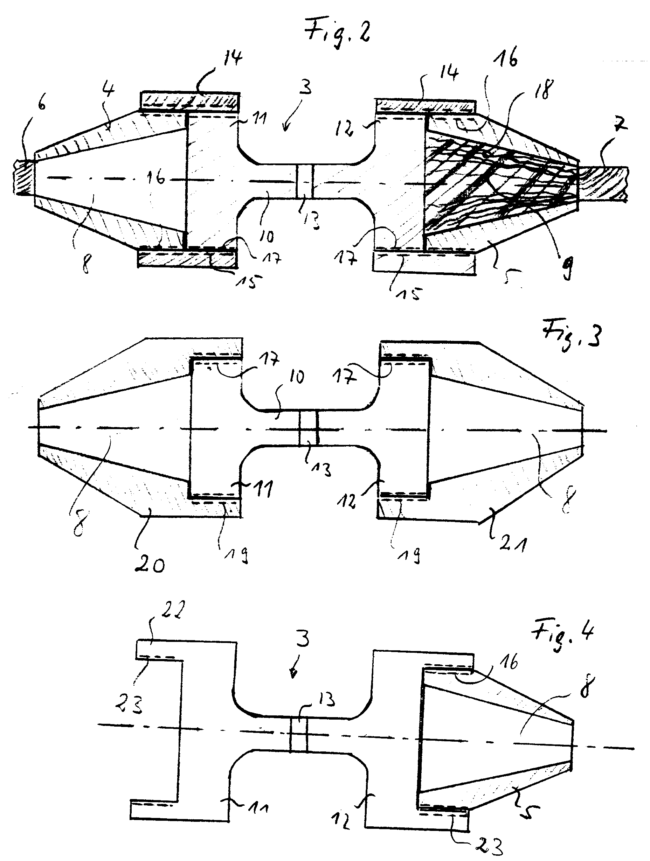

Um die Meßeinrichtung 3 kraftschlüssig mit Seilstücken 6, 7 des Seiles zu verbinden, in welches die Kraftmeßeinrichtung 3 eingesetzt werden soll, besitzt die Kraftmeßeinrichtung 3 ferner Verankerungselemente 4, 5. Die Verankerungselemente 4, 5 enthalten einen konisch geformten Innenraum 8. Der kleinere Durchmesser des konisch geformten Innenraumes 8 liegt an dem Ende, das zum jeweiligen Seilstück 6 bzw. 7 führt. Der größere Durchmesser des konisch geformten Innenraumes 8 befindet sich auf der Seite bzw. an dem Ende des jeweiligen Verankerungselements 4, 5, das der Kraftmeßeinrichtung 3 zugewandt ist. Die Verankerungselemente 4, 5 besitzen beim Ausführungsbeispiel der Figuren 1 und 2 einen zylindrischen Außenmantel mit einem Außengewinde 16 und einem konisch verlaufenden Mantelteil. Das Außengewinde 16 befindet sich angrenzend an dem Ende, welches mit der Kraftmeßeinrichtung 3 verbunden wird, während der konisch verlaufende Außenmantel an das Ende des Verankerungselementes angrenzt, das mit dem jeweiligen Seilstück 6 bzw. 7 verbunden wird.

Die Außengewinde 16 und 17 auf den Verankerungselementen 4 und 5 und den Verbindungsstücken 11 und 12 an der Kraftmeßeinrichtung 3 haben gleichen Durchmesser und gleiche Steigung. Sie entsprechen Innengewinden 15 von zwei Überwurfmuttern 14, die zur kraftschlüssigen Verbindung der beiden Verankerungselemente 4 und 5 mit den endseitigen Verbindungsstücken 11 und 12 der Kraftmeßeinrichtung 3 dienen, wie das in Figur 2 gezeigt ist.

Zur Verankerung der beiden Seilstücke 6 und 7, die sich dadurch ergeben, daß das Seil, in welches die Meßeinrichtung 1 eingesetzt werden soll, durchgetrennt wird, werden die beiden aufeinander zu gerichteten Enden der beiden Seilstücke 6 und 7 aufgespleist. Wenn es sich um ein Stahldrahtseil handelt, werden die einzelnen Drähte des Stahldrahtseiles aufgespleist. Die aufgespleisten Drähte 18 werden, wie in Figur 2 für das rechte Verankerungselement 5 dargestellt ist, in den konisch geformten Innenraum 8 der beiden Verankerungselemente 4 und 5 eingebracht. Die Anordnung der aufgespleisten Drähte 18 erfolgt so, daß bezüglich der Konusachse die Mehrheit der Drähte außen, d.h. in der Nähe der konischen Innenwand des Innenraumes 8 liegen. Vereinzelte Drähte können auch innen liegen. Ferner wird in fließfähiger Form in den konischen Innenraum 8 ein Füllmaterial 9 eingebracht werden, das nach dem Eingießen ausgehärtet wird. Auf diese Weise erreicht man einen der Konusform des Innenraumes 8 angepaßten Formkörper, bestehend aus dem ausgehärteten Füllmaterial 9 und den eingebetteten aufgespleisten Drähten 18. Auf diese Weise sind die Seilstücke 6 und 7 fest in den Verankerungselementen 4 und 5 verankert.

Die formschlüssige Verbindung der Kraftmeßeinrichtung 3 mit den Seilstücken 6 und 7 erfolgt über die Verankerungselemente 4 und 5. Hierzu werden die Verbindungsstücke 11 und 12 der Kraftmeßeinrichtung 3 mit den Verankerungselementen 4 und 5 verschraubt. Beim Ausführungsbeispiel der Figuren 1 und 2 erfolgt dies mit Hilfe der beiden Überwurfmuttern 14, deren Innengewinde 15 in die Außengewinde 16 und 17 der Verankerungselemente 4 und 5 und Verbindungsstücke 11 und 12 eingreift. Die Innengewinde 15 der Überwurfmutter 14 sowie die Außengewinde 16 und 17 können gegenläufig sein, so daß durch das Verschrauben die Kraftmeßeinrichtung 3 und die beiden an den Enden aufgesetzten Verankerungselemente 4 und 5 fest aneinander gepreßt werden. So wird ein noch erhöhter Kraftschluß erreicht.

Die Ausführungsbeispiele der Figuren 3 und 4 unterscheiden sich gegenüber dem Ausführungsbeispiel der Figuren 1 und 2 durch andersartige Schraubverbindungen zwischen der Kraftmeßeinrichtung 3 und den Verankerungselementen. Im übrigen sind sie in der gleichen Weise ausgebildet wie das Ausführungsbeipiel der Figuren 1 und 2.

Beim Ausführungsbeispiel der Figur 3 besitzen Verankerungsmittel 20 und 21 Innengewinde 19. Die Innengewinde 19 sind mit den Außengewinden 17 an den Verbindungsstücken 11 und 12 der Kraftmeßeinrichtung 3 verschraubt. Die Verankerung der aufgespleisten Drähte 18 erfolgt in der gleichen Weise, wie es in der Figur 2 dargestellt ist.

Bei dem in der Figur 4 dargestellten Ausführungsbeispiel sind die Verankerungselemente 4 und 5 in der gleichen Weise ausgebildet wie beim Ausführungsbeispiel der Figuren 1 und 2. An die Verbindungsstücke 11 und 12 der Kraftmeßeinrichtung 3 sind Schraubverbindungsteile 22 angeformt, die Innengewinde 23 haben. Die Innengewinde 23 sind mit den Außengewinden 16 der Verankerungselemente 4 und 5, von denen das Verankerungselement 5 dargestellt ist, zur kraftschlüssigen Verbindung verschraubt.

Mit Hilfe der dargestellten Kraftmeßeinrichtungen können vorzugsweise Zugkräfte, welche in dem jeweiligen Seil, in welches die Kraftmeßeinrichtung 3 eingebaut ist, gemessen werden. Es können jedoch auch quer oder in einem Winkel zur Achse gerichtete Kraftkomponenten durch entsprechende Anordnung des Kraftmeßwandlers 13 am Verformungskörper bzw. Meßsteg 10 erfaßt werden, wenn dies erforderlich ist.

## Patentansprüche

1. Vorrichtung zum Messen von Kräften, die an einem Schutznetz auftreten,
dadurch **gekennzeichnet,**
daß eine Kraftmeßeinrichtung (3) kraftschlüssig mit und zwischen zwei Verankerungsmitteln (4, 5) angeordnet ist und daß die Verankerungsmittel (4, 5) mit zwei Seilstücken (6, 7) eines Seils des Schutznetzes (2) kraftschlüssig verbunden sind.

2. Vorrichtung nach Anspruch 1, dadurch gekennzeichnet, daß das jeweilige Verankerungsmittel (4) bzw. (5) einen konusförmigen Innenraum (8) aufweist, dessen größerer Durchmesser bezüglich der Lage des Kraftmeßwandlers (3) innen und dessen kleinerer Durchmesser bezüglich der Lage des Kraftmeßwandlers (3) außen liegt und daß ein aufspleisbares Ende des jeweiligen Seilstückes (6) bzw. (7) zusammen mit einem Füllmaterial (9) in den konusförmigen Innenraum (8) einsetzbar ist.

3. Vorrichtung nach Anspruch 2, dadurch gekennzeichnet, daß das Füllmaterial (9) beim Einbringen in den konusförmigen Innenraum (8) fließfähig und nach dem Einbringen aushärtbar ist.

4. Vorrichtung nach einem der Ansprüche 1 bis 3, dadurch gekennzeichnet, daß die aufgespleisten Drähte (18) der Seilenden in der Mehrzahl im bezüglich der Konusachse außenliegenden Bereich des konusförmigen Innenraumes (8) im Füllmaterial (9) angeordnet sind.

5. Vorrichtung nach einem der Ansprüche 1 bis 4, dadurch gekennzeichnet, daß die Kraftmeßeinrichtung (3) einen Verformungskörper (10) mit einem Meßwandler (13) aufweist und daß an beiden Enden des Verformungskörpers (10) Verbindungsstücke (11, 12) vorgesehen sind, welche kraftschlüssig mit den Verankerungsmitteln (4, 5) verbunden sind.

6. Vorrichtung nach einem der Ansprüche 1 bis 5, dadurch gekennzeichnet, daß der Kraftschluß zwischen den beiden Verankerungsmitteln (4, 5) und den Verbindungsstücken (11, 12) des Verformungskörpers (10) durch eine Schraubverbindung (15, 16, 17; 17, 19; 16, 23) gebildet ist.
